# EUROPÄISCHE PATENTSCHRIFT

(11) **EP 2 729 313 B1**
(45) Veröffentlichungstag und Bekanntmachung des Hinweises auf die Patenterteilung: **28.03.2018**
(21) Anmeldenummer: 12740917.5
(22) Anmeldetag: 06.07.2012
(51) Int. Cl.: B60B 35/04, B60G 11/22

(54) **ACHSE UND HERSTELLVERFAHREN**
AXLE AND PRODUCTION METHOD
ESSIEU ET SON PROCÉDÉ DE PRODUCTION

(30) Priorität: 08.07.2011 DE 202011103222 U
(43) Veröffentlichungstag der Anmeldung: 14.05.2014
(73) Patentinhaber: Alois Kober GmbH, 89359 Kötz (DE)
(72) Erfinder: BECK, Gerhard, 89343 Jettingen-Scheppach (DE); HILDENSPERGER, Wolfgang, 89343 Jettingen-Scheppach (DE); KÖHLER, Robert, 86480 Waltenhausen (DE); SCHUSTER, Georg, 89349 Burtenbach/OT Kemnat (DE); UHL, Stefan, 89312 Günzburg (DE); WEGSCHEIDER, Peter, 89359 Kötz-Großkötz (DE)
(74) Vertreter: Ernicke, Klaus Stefan
(86) Internationale Anmeldenummer: PCT/EP2012/063226
(87) Internationale Veröffentlichungsnummer: WO 2013/007626

(56) Entgegenhaltungen:
- EP-A1- 0 555 541
- DE-B- 1 189 392
- FR-A1- 2 753 930
- GB-A- 815 608
- GB-A- 2 032 049
- US-B1- 6 588 778

## Beschreibung

Die Erfindung betrifft eine Achse und ein Herstellverfahren mit den Merkmalen des Vorrichtungs- und Verfahrenshauptanspruchs.

Eine solche Achse ist aus der US 6,588,778 B1 bekannt. Sie ist als Laufachse für einen Anhänger ausgebildet und weist einen Achskörper, eine Achsfederung und eine Schwinghebelanordnung auf. Die Schwinghebelanordnung ist einteilig ausgebildet und besteht aus einem inneren Achsrohr und einem Schwinghebel, die unterschiedliche Querschnittsformen haben und aus einem vorgefertigten einteiligen Rohr durch einen Hydroformprozess hergestellt sind. Das innere Achsrohr steckt in einem mit dem Anhänger verbundenen äußeren Achsrohr, wobei dazwischen Gummischnüre zur Bildung der Achsfederung eingelegt sind. Am freien Rohrende des mehrfach abgewinkelten Schwinghebels ist ein Achsstummel eingesteckt. Die vorbekannte Schwinghebelanordnung erfordert einen hohen und kostenträchtigen Bauaufwand.

Die FR 2 753 930 zeigt eine ähnliche Gummifederachse mit einer einteiligen Schwinghebelanordnung, die aus einem vorgefertigten und gebogenen Rohr mit einem kreisrunden Querschnitt besteht. Auch diese Konstruktion ist bau- und kostenaufwändig, wobei die Biegung vorgefertigter Rohre mit einem geschlossenen Mantel auch Schwierigkeiten mit der Maßhaltigkeit und der Festigkeit verursachen kann.

Die GB 815,608 A befasst sich mit einer mehrteiligen Gummifederachse und einer Schwenkhebelanordnung, die von einem inneren Achsrohr und einem Schwenkhebel aus geschweißten Blechschalen gebildet wird, wobei das Achsrohr und der Schwenkhebel durch eine Zapfenlagerung mit einer Winkel-Feineinstellung verbunden sind.

Aus der EP 0 555 541 A1 ist ein Fahrgestell mit daran angelenkten, abgefederten Rädern und mit am Fahrgestell befestigten, auf dem Boden abstützbaren Abstützzylindern zum Entlasten der Räder bekannt. Die Räder sind am Fahrgestell mit Halbachsen angelenkt, deren Länge ein Absenken des Fahrgestells mit den Abstützzylindern auf den Boden gestattet.

DE 1 189 392 B zeigt ebenfalls eine mehrteilige Schwinghebelanordnung, die aus mehreren miteinander verschweißten Hohlprofilen gebildet ist.

Es ist Aufgabe der vorliegenden Erfindung, eine bessere Achse, insbesondere eine bessere Schwinghebelanordnung nebst Herstelltechnik, aufzuzeigen.

Die Erfindung löst diese Aufgabe mit den Merkmalen im Vorrichtungs- und Verfahrenshauptanspruch.
Die Ausbildung der abgewinkelten Schwinghebelanordnung als einteiliges, rohrförmiges Stanz- und Biegeteil aus Metall, insbesondere aus einem Stahlblech, hat Vorteile hinsichtlich des Bau- und Kostenaufwands. Außerdem kann eine hohe Fertigungsgenauigkeit und Maßhaltigkeit erzielt werden.

Die Formgebung, insbesondere die Querschnittsgeometrie der rohrförmigen Schwinghebelanordnung kann an die Erfordernisse angepasst werden, insbesondere hinsichtlich Festigkeit und Bauraum. Ein prismatischer, insbesondere dreieckiger Querschnitt ist dabei vorteilhaft. Günstig ist ferner die Möglichkeit, bei Bedarf gezielt eine oder mehrere Verstärkungen an der Schwinghebelanordnung anzubringen, insbesondere im Biege- oder Krümmungsbereich. Hier kann insbesondere eine wulstartige Verbreiterung des Querschnitts erfolgen.

Kosten- und aufwandsmindernd wirkt sich ferner die Verbindung mit einem Achsstummel aus, der quer an dem Schwinghebel angeordnet und insbesondere in einer dortigen Ausnehmung geführt und fixiert werden kann.

Die beanspruchte Schwinghebelanordnung kann als einfach oder mehrfach abgewinkeltes Rohr mit einem geschlossenen Querschnitt ausgebildet sein, wobei die beim Biegen sich ergebende und insbesondere längs laufende Stoßkante mit einer Fügenaht, insbesondere einer Schweißnaht, geschlossen und fixiert werden kann. Auch im Biegebereich kann eine solche Fügenaht vorhanden sein. Die Fertigungstechnik ermöglicht auch kostengünstige Formvarianten der Schwinghebelanordnung zur Anpassung an unterschiedliche Achsen oder Fahrzeuge.

Die abgewinkelte Schwinghebelanordnung kann aus einem einzelnen Blechstreifen durch Stanzen und Biegen geformt werden. Funktionale Formgebungen, z.B. Einbuchtungen für Federelemente, wulstartige Verstärkungen etc. können dabei durch Prägen einfach und kostengüstig im Prozess geschaffen werden. Die eingesetzte Fertigungstechnik ist besonders kosten- und aufwandsgünstig und bietet zugleich Variationsmöglichkeiten.

Die Schwinghebelanordnung kann derart bemessen und abgestimmt sein, dass der Schwinghebel im Felgeninnenraum einer Felge aufgenommen werden kann. Hierdurch kann das Rad mit der Felge nahe an den Achskörper und an die seitlichen Fahrzeugränder herangerückt werden. Dies erlaubt eine schmalere Bauform des Fahrzeugs oder alternativ eine Vergrößerung der Nutzbreite des Fahrzeugs. Außerdem kann der Felgeninnenraum den Schwinghebel schützend umgeben und gegen Einflüsse von außen abschirmen. Weitere Vorteile der Anordnung des Schwinghebels in der Felge sind Kosteneinsparungen und eine Verringerung der ungefederten Massen durch das geringere Schwinghebelgewicht. Ferner verringert sich der seitliche Abstand zwischen der bodenseitigen Radauflagefläche und der Achsfederung, insbesondere zu deren Federelementen. Dadurch ergibt sich ein besseres Spur- und Sturzverhalten. Andererseits wird durch den kleineren seitlichen Abstand die daraus resultierende Momentenbelastung der Achsfederung reduziert, was den Einsatz kürzerer und kostengünstigerer Federelemente, insbesondere Gummischnüre, ermöglicht. Diese Gestaltung einer Schwinghebelanordnung hat eigenständige erfinderische Bedeutung und lässt sich auch in Verbindung mit anderen vorbekannten Schwinghebelanordnungen kombinieren.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische Anordnung einer Achse mit einem Achskörper und zwei endseitigen Schwinghebelanordnungen,
- Figur 2:: eine gebrochene und vergrößerte Darstellung einer Schwinghebelanordnung von Figur 1,
- Figur 3 und 4:: eine Draufsicht und eine Vorderansicht der Achse von Figur 1 in abgebrochener und verkürzter Darstellung,
- Figur 5:: einen Schnitt durch die Achse gemäß Schnittlinie V-V von Figur 4,
- Figur 6:: eine geklappte und vergrößerte Seitenansicht der Achse gemäß Pfeil VI von Figur 4,
- Figur 7:: eine Vorderansicht einer Schwinghebelanordnung,
- Figur 8:: einen Schnitt gemäß Schnittlinie VIII-VIII von Figur 7,
- Figur 9:: eine Stirnansicht der Schwinghebelanordnung gemäß Pfeil IX von Figur 7,
- Figur 10:: einen Schnitt durch die Schwinghebelanordnung gemäß Schnittlinie X-X von Figur 9,
- Figur 11:: eine perspektivische Ansicht einer Stanzplatine und der Herstellungsschritte zur Bildung einer Schwinghebelanordnung,
- Figur 12 und 13:: eine Variante der Schwinghebelanordnung in perspektivischer Ansicht und Stirnsicht,
- Figur 14:: eine perspektivische Ansicht einer weiteren Variante der Schwinghebelanordnung,
- Figur 15 bis 16:: eine abgebrochene und teilweise geschnittene Seitenansichten einer Achse mit einer Schwingarmhebelanordnung und einem Rad mit einer Felge,
- Figur 17 und 18:: eine Variante der Schwinghebelanordnung mit einer Radbremse in Seitenansicht und im Schnitt XVIII - XVIII und
- Figur 19 und 20:: Schwinghebelanordnung mit und ohne Radbremse und unterschiedlichen Biegewinkeln in geschnittener Vorderansicht.

Die Erfindung betrifft eine Achse (1), insbesondere eine Laufachse, für Fahrzeuge, insbesondere Anhänger. Die Erfindung betrifft ferner eine Schwinghebelanordnung (6) für eine solche Achse und das mit einer Achse (1) ausgerüstete Fahrzeug. Außerdem befasst sich die Erfindung mit einem Herstellverfahren.

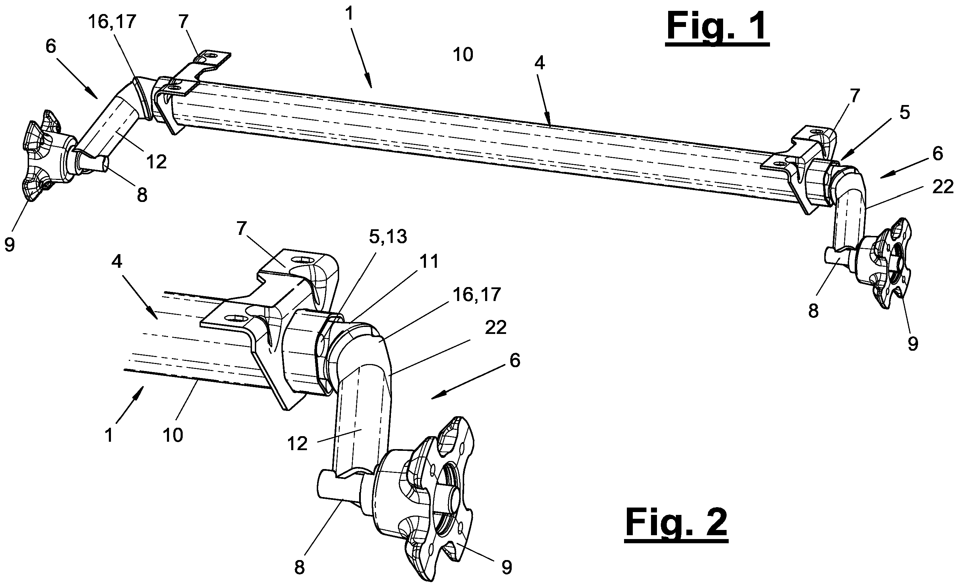

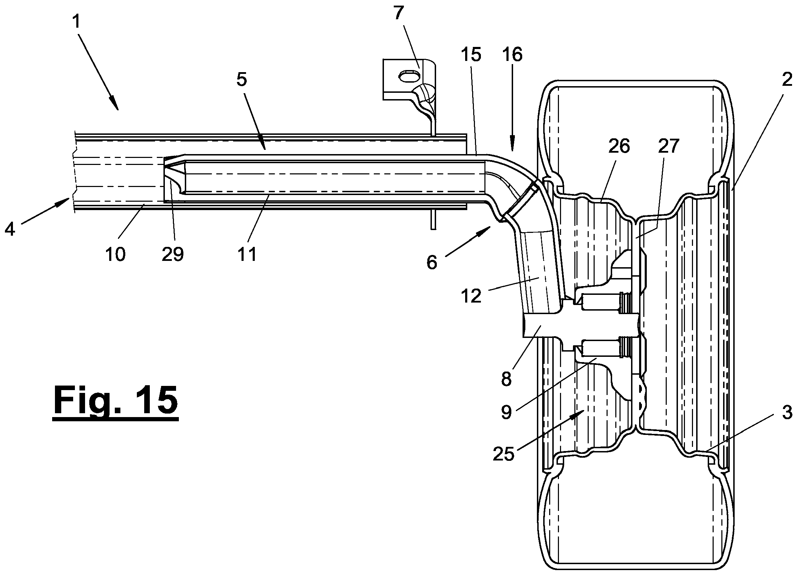

Figur 1 zeigt beispielhaft eine solche Achse (1), die hier z.B. als ungebremste Laufachse ausgebildet ist. Die Achse (1) weist einen Achskörper (4) und eine daran gelagerte Schwinghebelanordnung (6) auf, welche eine Nabe (9) und das Rad (vgl. Figur 15 bis 18) trägt. Die Achse (1) weist ferner eine Federung (5) für die Schwinghebelanordnung (6) auf und ist z.B. als Gummifederachse ausgebildet.

In der gezeigten Ausführungsform befindet sich an beiden Enden des Achskörpers (4) eine Schwinghebelanordnung (6). In einer nicht dargestellten Variante kann die Achse (1) als geteilte Achse ausgebildet sein, an deren zwei verkürzten Achskörpern (4) jeweils nur an einer Seite eine Schwinghebelanordnung (6) gelagert ist.

Der Achskörper (4) besitzt ein tragendes Achsteil (10) mit einem Beschlag (7) zur Befestigung an einem Fahrzeug, insbesondere einem Anhänger. Der Beschlag (7) kann z.B. als abgewinkelter Montageflansch ausgebildet und an beiden Achskörperenden angeordnet sein. Er dient zur Befestigung des Achskörpers (4) an einem Chassis, insbesondere an Längsträgern oder am Boden eines Fahrzeugaufbaus. Das tragende Achsteil (10) ist in der gezeigten Ausführungsform als gerades äußeres Achsrohr ausgebildet, welches z.B. einen prismatischen Querschnitt hat.

Die Federung (5) ist in dem gezeigten Ausführungsbeispiel als Achsfederung ausgebildet, die im Achsteil bzw. äußeren Achsrohr (10) integriert ist. Alternativ oder zusätzlich kann die Federung (5) in anderer Weise ausgebildet sein und z.B. aus externen Federn bestehen. Dies können beispielsweise Schraubenfedern, Blattfedern, aber auch Luftfedern oder dgl. sein.

Eine Schwinghebelanordnung (6) ist an einem oder an beiden offenen Rohrenden in das äußere Achsrohr (10) eingesteckt und hier gelagert. Die Lagerung kann z.B. über die Achsfederung (5) gebildet werden.

Die Schwinghebelanordnung (6) besteht aus einem inneren Achsteil (11) und einem daran endseitig quer oder schräg anschließenden Schwinghebel (12). Das innere Achsteil (11) ragt in das äußere Achsrohr (10) und ist hier in geeigneter Weise gelagert, z.B. über die Achsfederung (5). Eine Einführschräge (29) an der Frontseite des Achsteils (11) erleichtert das Einstecken in das Achsrohr (10).

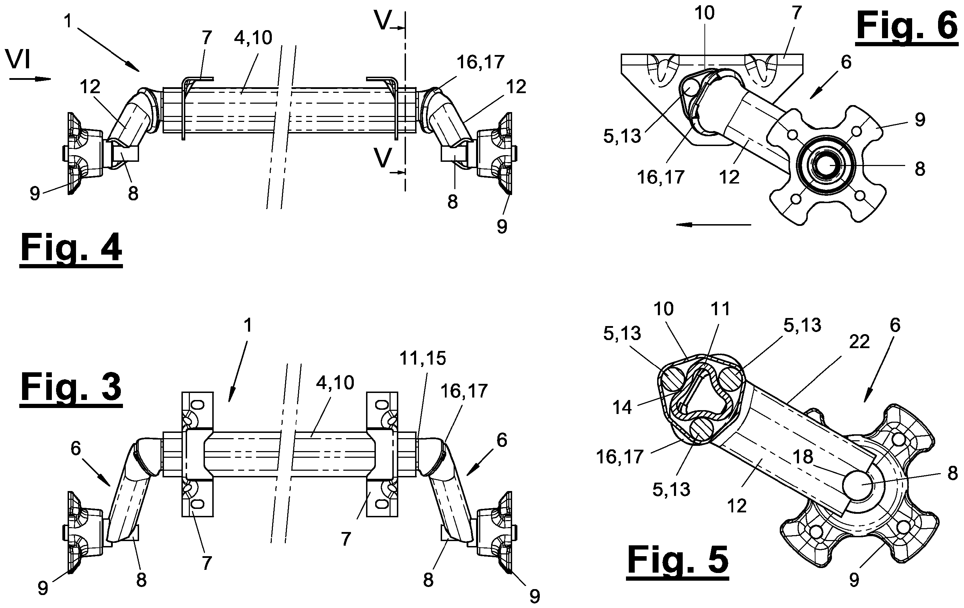

Wie Figur 1 bis 6 verdeutlichen, ist die Schwinghebelanordnung (6) in einer derartigen Drehlage im Achsrohr (10) eingebaut, dass im unbelasteten Zustand der jeweilige Schwinghebel (12) schräg nach unten ragt und dabei gegen die in Figur 6 mit einem Pfeil markierte Fahrtrichtung gerichtet ist (Schleppstellung).

Der Schwinghebel (12) trägt am freien Ende einen Achsstummel (8), auf dem wiederum eine Radnabe (9) drehbar gelagert ist. An der Radnabe (9) kann die Felge (3) eines Rades (2) befestigt werden. Diese Anordnung ist in Figur 15 bis 18 dargestellt und wird nachfolgend näher beschrieben.

Das innere Achsteil (11) hat eine gerade Ausrichtung und weist am Mantel mehrere Federaufnahmen (14) auf, in die jeweils ein Federelement (13) eingelegt ist. Die Federaufnahmen (14) können als wannenförmige Einbuchtungen ausgebildet sein und nehmen z.B. eine im Querschnitt kreisrunde Gummischnur auf. Die Federelemente (13) liegen außenseitig an der Wandung des äußeren Achsrohrs (10) an. Figur 5 zeigt diese Ausbildung. Die Querschnittsform des inneren Achsteils (11) kann z.B. im wesentlichen dreieckig sein und zur Aufnahme von drei gleichmäßig am Umfang verteilten Federelementen (13) dienen.

Das innere Achsteil (11) kann hohl sein und als Rohr ausgebildet sein. Auch der Schwinghebel (12) kann rohrförmig gestaltet sein. Die Schwinghebelanordnung (6) ist in den Ausführungsbeispielen als abgewinkeltes Rohr (22) ausgebildet. Das Rohr (22) hat z.B. eine L-Form mit einer Krümmung oder Abwinklung (16) an der Übergangsstelle zwischen dem inneren Achsteil (11) und dem Schwinghebel (12). Der Biegewinkel **α** kann z.B. 90° betragen.

Die Querschnittsform des Rohrs (22) kann variieren. Im Bereich des inneren Achsteils (11) ist sie dreieckig und hat zumindest bereichsweise drei Einbuchtungen (14). Im Bereich des Schwinghebels (12) kann sie ebenfalls dreieckig sein. Im Bereich der Biegung oder Krümmung (16) kann eine stellenweise andere Formgebung vorhanden sein. Ansonsten kann das Rohr (22) auch andere Querschnittsformen, z.B. kreisrund, oval oder eine andere Prismenform aufweisen. Die Querschnittsgeometrie kann über die Rohrlänge variieren.

Im Bereich der Biegung oder Krümmung (16) kann das Rohr (22) eine Verstärkung (17) aufweisen. Diese kann z.B. wulstförmig ausgebildet sein und den Rohrquerschnitt vergrößern, wobei die Rohrwandung (24) entsprechend ausgebaucht ist. Der größere Querschnitt versteift die Schwinghebelanordnung (6) im Krümmungs- und Biegebereich.

Der Achsstummel (8) kann am freien Ende des Schwinghebels (12) mit einer Querausrichtung angeordnet und befestigt sein. Hierfür kann der Schwinghebel (12) eine Ausnehmung (18) an der Rohrwandung (24) aufweisen, die z.B. als halbkreisförmige Doppelschale ausgebildet ist und den zylindrischen Achsstummel (8) aufnimmt und führt, wobei die Fixierung durch Schweißen oder auf andere geeignete Weise geschehen kann.

Das innere Achsteil (11) kann mit einem Überstand (15) aus dem äußeren Achsrohr (10) ragen, wobei der Schwinghebel (12) und die Krümmung (16) entsprechend vom Rohrende distanziert sind.

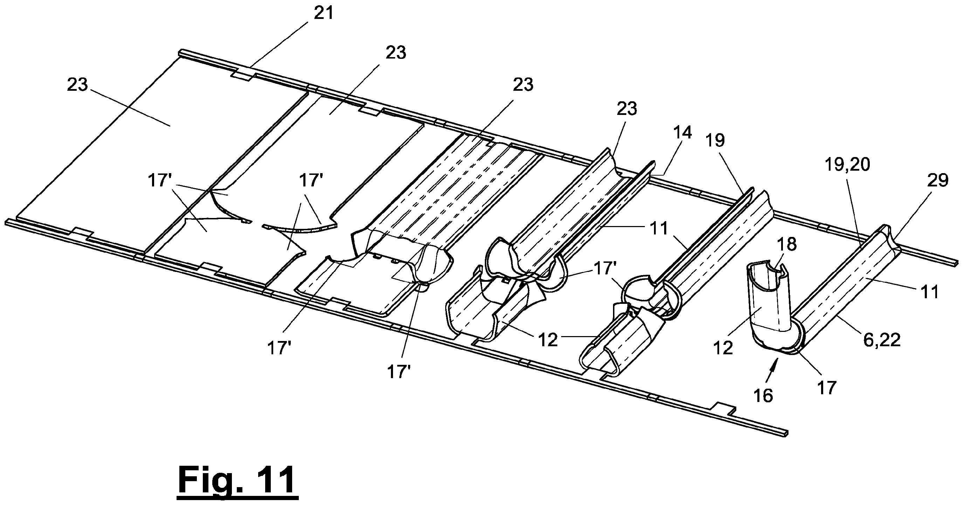

Die Schwinghebelanordnung (6) ist als einteiliges Stanz- und Biegeteil aus Metall, z.B. Stahl, ausgebildet und wird z.B. aus einem einzelnen Blechstreifen (23) gefertigt. Figur 11 zeigt hierzu eine Stanzplatine (21) und die Abfolge mehrerer Stanz- und Biegeschritte, die mit einem entsprechenden Folgewerkzeug (nicht dargestellt) durchgeführt werden.

Aus der ebenen Platine (21) wird zunächst ein ebener Blechstreifen (23) bis auf zwei endseitige Haltenasen freigeschnitten, der anschließend durch einen oder mehrere weiteren Stanzschnitte geformt und außerdem durch Prägen und Biegen verformt wird. Beim Stanzen werden z.B. Flügel (17') zur späteren Bildung des Wulstes (17) und die Ausnehmung (18) freigeschnitten.

Mit einem Biege- und Prägewerkzeug können in den nächsten Fertigungsschritten die Einbuchtungen (14) und der Wulst (17) geformt sowie der Blechstreifen (23) zur Bildung der hohlen und z.B. dreieckeigen Rohrform umgebogen werden. Die Flügel (17') werden zur Wulstformung bauchig gewölbt und umgebogen. Auch die Einführschräge (29) kann geprägt werden. Mit den vorgenannten Fertigungsschritten werden das Achsteil (11) und der Schwinghebel (12) mit zunächst fluchtender Ausrichtung geformt, wobei im letzten in Figur 11 gezeigten Schritt der Schwinghebel (12) um ca. 90° gegenüber dem inneren Achsteil (11) umgebogen wird. Die Blechstreifenränder stoßen etwa in der längs laufenden Mittellinie des nun geformten Rohres (22) zusammen und bilden Stoßkanten (19), die anschließend mit einer Fügenaht (20) verbunden werden können. Dies kann z.B. durch Schweißen oder in anderer geeigneter Weise geschehen. Auch an den ausgebauchten ovalen Wulsträndern entstehen Stoß- oder Verbindungskanten (19), die nach der Rohrbiegung zusammenstoßen und mit einer Fügenaht (20), verschlossen werden. Der Stoß (19) im Biegebereich (16) und am Wulst (17) ist z.B. als Überlappstoß ausgebildet, wobei die Füge- oder Schweißnaht (20) als Kehlnaht ausgeführt ist. Dies ist günstig für eine prozesssichere Schweissung. Alternativ ist auch ein stumpfer Stoß (19) möglich.

Das gebogene Rohr (22) erhält durch den Stoß (19) und die Füge- oder Schweißnaht (20) einen geschlossenen Mantel (24). Vor oder nach dem Fügen wird das Rohr (22) von den Platinenresten abgetrennt und weiterverarbeitet bzw. montiert.

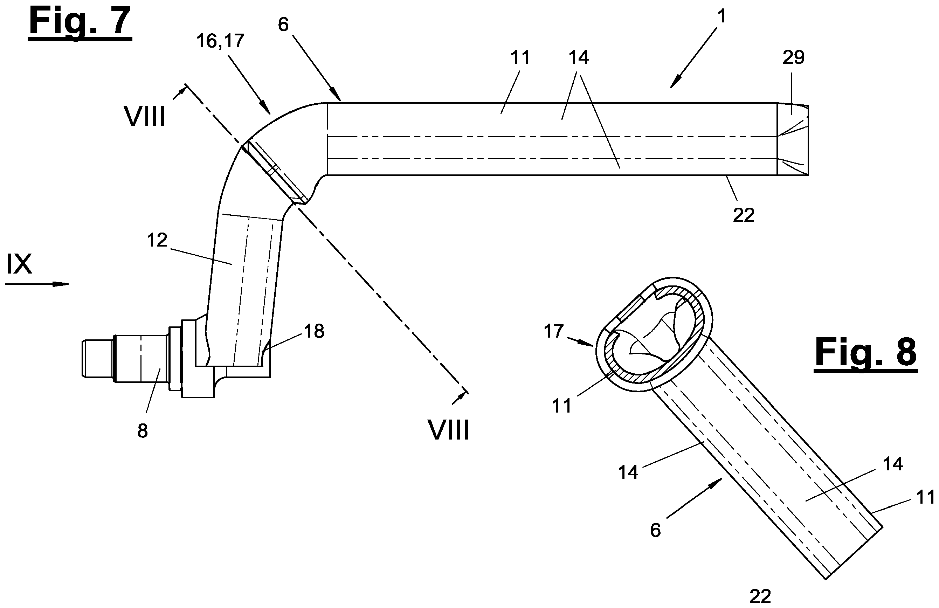

Figur 7 bis 10 zeigen die vorbeschriebene Rohrgeometrie mit der rechten und linken Schwinghebelanordnung (6), die im wesentlich gleich ausgebildet sein können. Aus Figur 8 ist die im wesentlichen ovale Form des Wulstes (17) ersichtlich. Die ovale Form des Wulstes (17) und der durch den Wulst (17) vergrößerte Querschnitt sind aus Stabilitätsgründen vorteilhaft, da in diesem Bereich die Festigkeit durch die Schweißnaht (20) geschwächt sein kann. Die vorzugsweise ideale ovale Querschnittsform im Verbindungsbereich von Innenrohr (11) und Schwinghebel (12) ist vorteilhaft zur Übertragung der entstehenden Kräfte und zur Minimierung der Schweißnahtspannungen.

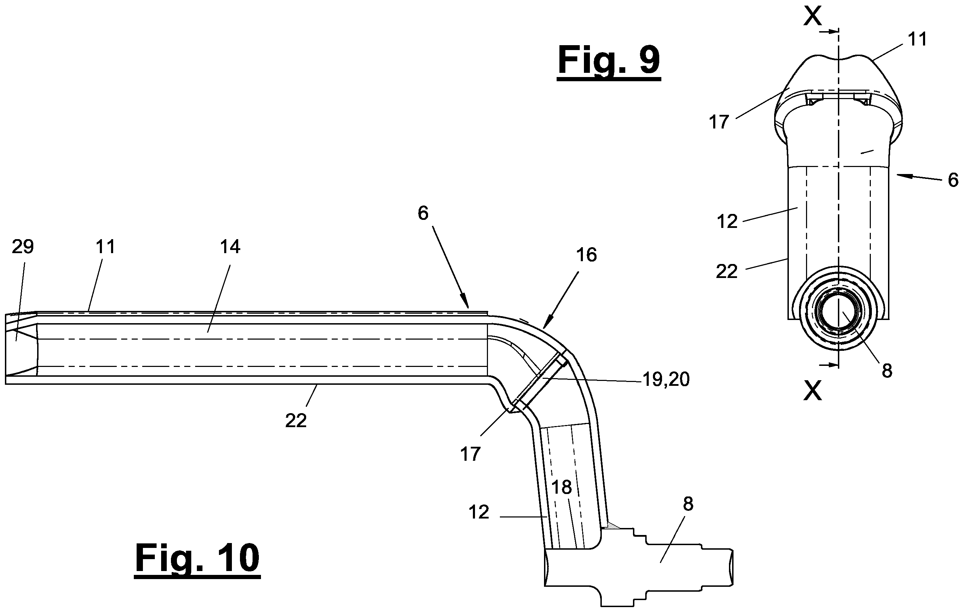

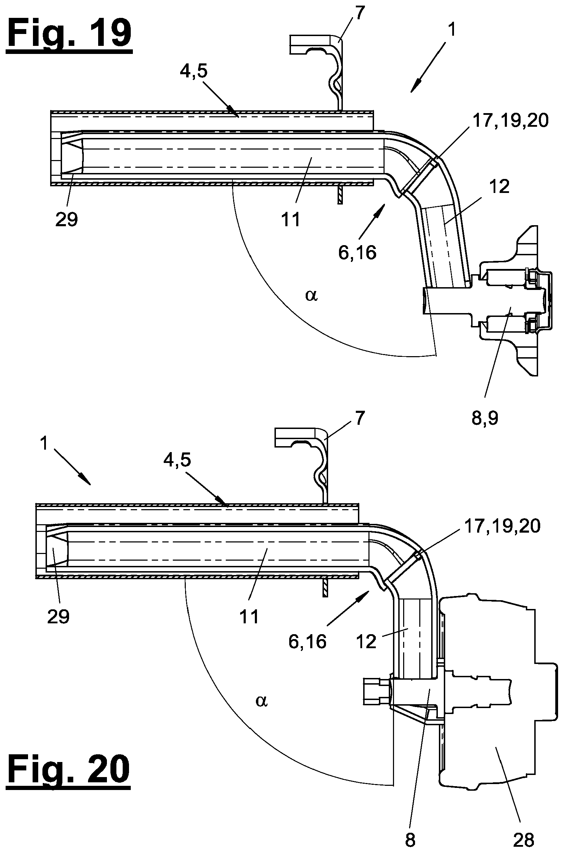

Die unterschiedlich großen Ausnehmungen (18) zur Aufnahme unterschiedlich großer Achsstummelabschnitte sind in Figur 7 und 10 gezeigt. Aus Figur 7, 10, 19 und 20 ist außerdem ersichtlich, dass der Biegewinkel **α** zwischen dem inneren Achsteil (11) und dem Schwinghebel (12) etwas größer als 90° und z.B. ca. 95° beträgt. Vorzugsweise liegt der Biegewinkel **α** zwischen 90° und 100°, kann aber auch andere Werte haben. Auf Figur 19 und 20 wird nachfolgend noch eingegangen.

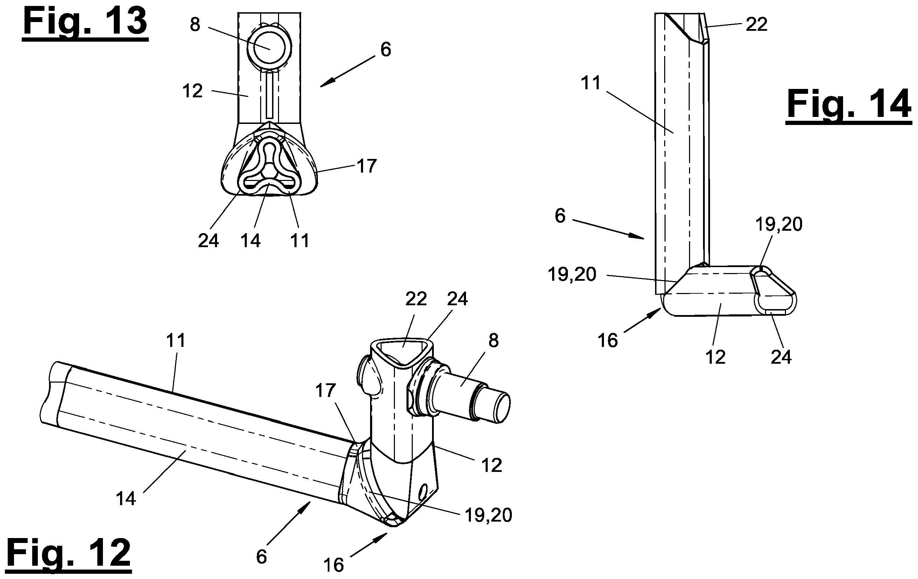

Figur 12 und 13 verdeutlichen eine erste Variante der Schwinghebelanordnung (6) und des Rohres (22). Der Rohrquerschnitt kann auch hier wieder wie im ersten Ausführungsbeispiel prismatisch und z.B. im wesentlichen dreieckig sein. Die Rohrwandung bzw. der Mantel (24) kann auch in diesem Ausführungsbeispiel Stoßkanten (19) und Fügenähte (20) aufweisen, die im Verlauf der geraden Rohrabschnitte (11,12) längs laufend und im Bereich der Biegung oder Krümmung (16) quer umlaufend sein können. Der Biegewinkel **α** der Krümmung (16) beträgt in diesem Ausführungsbeispiel 90°. Der Achsstummel (8) ist bei dieser Variante quer durch das Rohrende des Schwinghebels (12) durchgesteckt, wobei das Rohrende entsprechende Öffnungen mit Ausbauchungen zur Stummelaufnahme aufweist.

Figur 14 offenbart eine zweite Variante der Schwinghebelanordnung (6), die ähnlich wie im vorbeschriebenen Ausführungsbeispiel der Figuren 1 bis 11 ausgebildet ist, wobei in dieser Variante dem Rohr (22) eine wulstartige Verstärkung (17) im Biegebereich fehlt. Hier sind die Ränder der im Querschnitt dreieckigen Rohrabschnitte (11,12) an den Stoßkanten (19) mit einer Fügenaht (20) verbunden. Ferner sind auch längs laufende Stoßkanten (19) und Fügenähte (20) an den geraden Rohrabschnitten vorhanden.

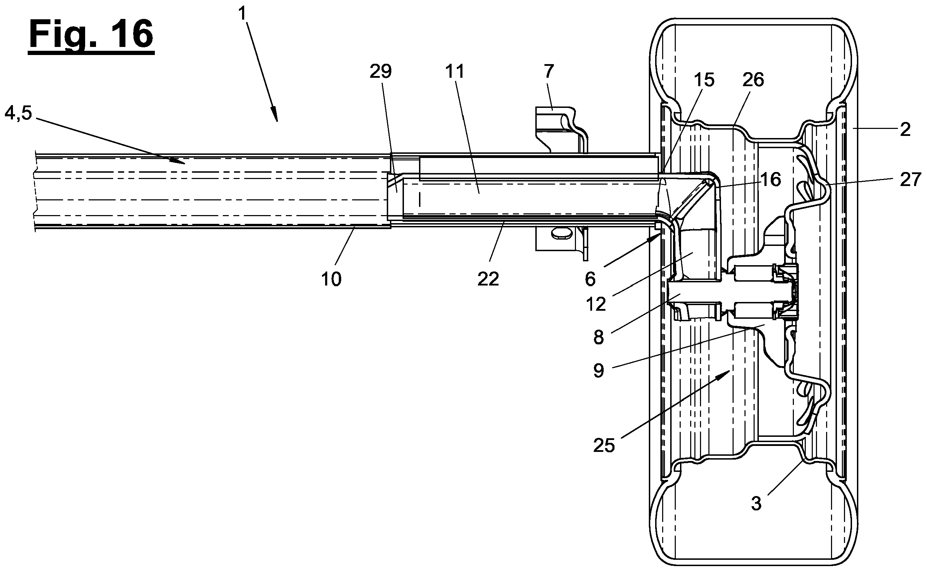

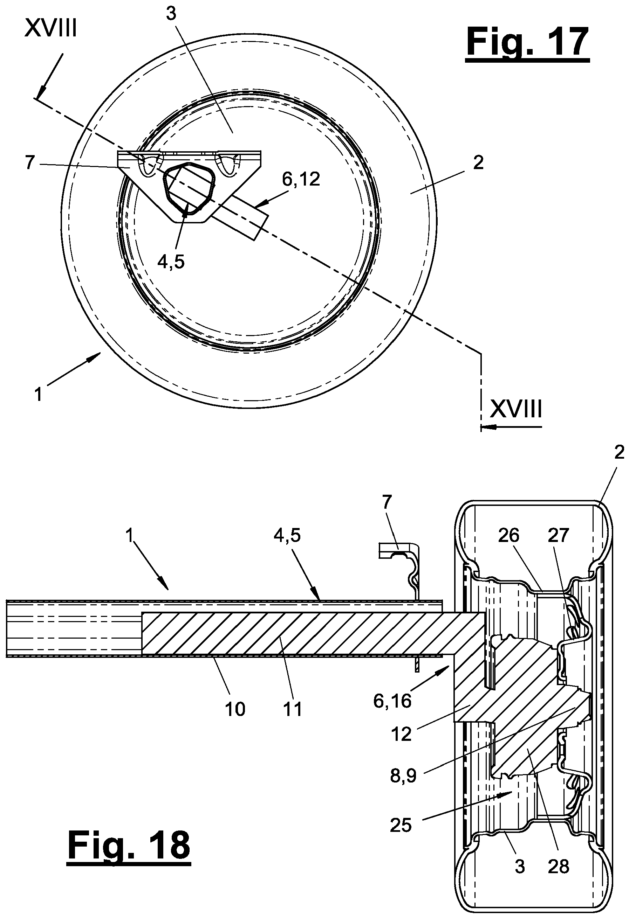

Figur 15 bis 18 zeigen verschiedene Varianten einer Radlagerung und einer Zuordnung der Schwinghebelanordnung (6) zum Rad (2). In allen Varianten besteht das Rad (2) aus einer Felge (3) und einem Reifen. Die Felge (3) besitzt ein Felgenbett bzw. einen umlaufenden Felgenring (26) und eine Felgenscheibe (27), die auch als Radkranz bezeichnet wird und an der die Nabe (9) mit Schrauben oder dgl. befestigt wird. In Figur 17 und 18 ist die zusätzliche Anordnung einer Radbremse (28), z.B. einer Trommelbremse, im Nabenbereich dargestellt. Alternativ kann es sich um eine Scheibenbremse oder eine andere Bremsart handeln. In den Varianten von Figur 15 und 16 fehlt eine Radbremse. In Variation zu den gezeigten Ausführungsformen kann auch bei Figur 15 und 16 eine Radbremse vorhanden sein.

Die Schwinghebelanordnung (6) entspricht in der Darstellung von Figur 15 der eingangs beschriebenen Ausführungsform von Figur 1 bis 11. Der um mehr als 90° abgewinkelte Schwinghebel (12) befindet sich weitgehend außerhalb des zwischen Felgenring (26) und Felgenscheibe (27) gebildeten Felgeninnenraums (25), wobei in letzteren im wesentlichen nur der Achsstummel (8) und die Naben (9) hineinragen. In dieser Ausführungsform der Schwinghebelanordnung (6) ist die Krümmung oder Biegung (16) weich gerundet. Außerdem ist ein Überstand (15) vorhanden, um den das gerade innere Achsteil (11) aus dem äußeren Achsrohr (10) ragt. Wie Figur 1 bis 6 verdeutlichen, ist bei dieser Variante der Schwinghebelanordnung (6) der Schwinghebel (12) schräg nach unten ausgerichtet.

Bei der Variante von Figur 16 befindet sich der Schwinghebel (12) im wesentlichen innerhalb des besagten Felgeninnenraums (25). Der Schwinghebel (12) hat hierfür eine verkürzte Länge. Außerdem kann der Biegewinkel **α** der Krümmung (16) kleiner sein und z.B. 90° betragen. Wie Figur 16 zeigt, liegt der gerade Teil des Schwinghebels vollständig innerhalb des Felgeninnenraums (25).

Das Ende des äußeren Achsrohrs (10) ragt bis zum Rad (2) und kann sogar ein kleines Stück über den Reifenumfang hinaus bis zur Felge (3) reichen. Der Überstand (15) ist verkürzt oder u.U. nicht vorhanden. Auch der Biegungs- und Krümmungsbereich der Schwinghebelanordnung (6) kann sich vollständig in dem vom Felgenring (26) und von der Felgenscheibe (27) gebildeten Felgeninnenraum (25) befinden. Der Schwinghebel (12) ist ähnlich wie in Figur 1 bis 6 schräg nach unten ausgerichtet. Die konstruktive Gestaltung der Schwinghebelanordnung (6) kann derjenigen der Variante von Figur 12 und 13 entsprechen.

In Abwandlung der gezeigten Ausführungsform kann auch die Schwinghebelanordnung (6) von Figur 1 bis 11 und 15 abgewandelt werden, wobei der Schwinghebel (12) in den besagten Felgeninnenraum (25) ragt und hier im wesentlichen aufgenommen ist. Hierzu kann der Schwinghebel (12) verkürzt und ggf. die Biegung oder Krümmung (16) verändert werden.

Wie ein Vergleich von Figur 15 und 16 zeigt, verringert sich bei der Aufnahme des Schwinghebels (12) im Felgeninnenraum (25) der seitliche Abstand des Rades (2) von der Seitenkontur des Fahrzeugs, insbesondere von der Seitenwand des Aufbaus bzw. von dem benachbarten Längsträger des Chassis. Dementsprechend kleiner wird die Spurweite des Fahrzeugs. Andererseits kann die Abstandsverkleinerung auch benutzt werden, um bei gegebener Spurweite die nutzbare Fahrzeugbreite des Aufbaus zu vergrößern. Außerdem ermöglicht die Unterbringung des Schwinghebels (12) im Felgeninnenraum (25) die Höhenabsenkung des Achskörpers (4) und des Fahrzeugs. Die Achsgestaltung von Figur 16 und die Unterbringung des Schwinghebels (12) im Felgeninnenraum (25) hat eigenständige erfinderische Bedeutung und kann auch bei anderen Arten von Schwinghebelanordnungen (6) eingesetzt werden. Diese können z.B. entsprechend des eingangs genannten Standes der Technik ausgebildet und einteilig sein. Die Schwinghebelanordnung (6) kann mehrteilig und insbesondere als Schweißteil ausgebildet sein. Sie kann auch als massives Gussteil ähnlich wie in Figur 17 und 18 gestaltet sein. Bei einer mehrteiligen Schwinghebelanordnung (6) kann sich eine Anschluss- oder Verbindungsstelle zwischen Schwinghebel (12) und innerem Achsteil (11) im Felgeninnenraum (25) befinden.

In den gezeigten Varianten von Figur 15 bis 18 befindet sich der Schwinghebel (12) zum größten Teil oder vollständig im Felgeninnenraum (25). Auch der Biegungs- und Krümmungsbereich der Schwinghebelanordnung (6) kann zum größten Teil oder vollständig im Felgeninnenraum (25) angeordnet sein. Der Felgenring (26) übergreift mit seinem freien Rand den Schwinghebel (12) und den Biegungs- und Krümmungsbereich
Figur 19 und 20 verdeutlichen den Umstand, dass der Biegewinkel **α** zwischen dem inneren Achsteil (11) und den Schwenkhebel (12) sich ändern kann, je nach dem, ob eine Radbremse (28) vorhanden ist oder nicht. Eine Änderung kann auch anderen Gründen unterliegen. Nachdem eine Radbremse (28) im Felgeninnenraum (25) mehr Platz beansprucht, wie dies auch in Figur 18 zu sehen ist, kann der Biegewinkel **α** dementsprechend kleiner sein und z.B. 90° betragen. Bei einer reinen Laufachse ohne Radbremse kann der Biegewinkel **α** größer sein und gemäß Figur 19 z.B. ca. 100° betragen.
Figur 19 und 20 verdeutlichen außerdem, dass die unterschiedlichen Biegewinkel **α** durch eine Veränderung der Stoßstelle (19) und der Schweißnaht (20) am Wulst (17) erreicht werden können. Das Prägeteil und dessen Herstellung gemäß Figur 11 kann dabei gleich sein. Die Winkeländerung kann in einer Schweißvorrichtung realisiert werden. Hierbei wird der Überlappungsgrad der Profilränder an der Stoßstelle (19) variiert, was z.B. durch unterschiedliche Verspannung erreicht werden kann. Hierbei ist wiederum eine Überlappung der Blechränder an der Stoßstelle (19) und eine Kehlnahtschweißung (20) von Vorteil.

In einer nicht dargestellten Variante ist es möglich, für eine einheitliche Gestaltung der Schwinghebelanordnung (6) stets gleiche Biegewinkel **α** für Laufachsen und gebremste Achsen vorzusehen und einen Ausgleich für das Anlagemaß der Felge (3) über einen entsprechend verlängerten Achsstummel (8) zu erreichen. Dies kann zu einer Gewichtszunahme führen. Die vorbeschriebene Anordnung mit variierenden Überlappungsmaßen an der Stoßstelle (19) erlaubt es, das Gewicht der Schwinghebelanordnung (6) ungeändert zu lassen.

Abwandlungen der gezeigten und beschriebenen Ausführungsformen sind in verschiedener Weise möglich. Insbesondere können die Merkmale der Ausführungsbeispiele untereinander vertauscht oder miteinander kombiniert werden. Varianten sind insbesondere hinsichtlich der Querschnittsausbildung des Rohrs (22), der Biegewinkel **α**, der Ausbildung der Biegung oder Krümmung (16), der Verstärkung (17) und der Verbindung mit einem Achsstummel (8) möglich. Die Federung (5) kann in anderer Weise ausgebildet sein und z.B. eine Drehstabfederung sein. Auf eine integrierte Achsfederung (5) kann zu Gunsten einer externen Federung verzichtet werden, wobei das innere Achsteil (11) eine entsprechend andere Form hat und in geeigneter Weise im äußeren Achsrohr (10) gelagert ist. Die Schwinghebelanordnung (6) kann auch bei einer solchen Ausführungsform als Stanz- und Biegeteil aus Metall ausgebildet sein. Ferner sind Varianten in der Biege- und Stanztechnik zur Herstellung einer bevorzugt einteiligen, evtl. auch mehrteiligen rohrförmigen Schwinghebelanordnung (6) möglich. Die in Figur 11 gezeigte Abfolge der Stanz- und Biegeschritte kann abgewandelt werden, indem Schritte vertauscht oder zusätzliche Schritte eingefügt werden. Das Prägen der Einführschräge (29) kann z.B. vor dem Biegen der L-Form des Rohrs (22) erfolgen. In der gezeigten Ausführungsform von Figur 11 kann die Abfolge der Stanz- und Biegeschritte mit dem erwähnten Folgewerkzeug, welches auch als Verbundfolgewerkzeug bezeichnet wird, in einem Stanzautomaten durchgeführt werden. Alternativ kann ein Transferwerkzeug eingesetzt werden, wobei zuerst einzelne Blechstücke in einer Trennstation von der z.B. bandförmigen oder tafelförmigen Platine (21) abgetrennt werden und die abgetrennten Einzelteile dann mittels Greifern in einer mit der Presse bzw. Biegeeinrichtung gekoppelten Transfereinrichtung von Arbeitsschritt zu Arbeitsschritt transportiert werden. In einer weiteren Abwandlung kann der Zuschnitt des Blechteils durch ein anderes Schneidverfahren, z.B. durch Laserschneiden, Brennschneiden oder dergleichen erfolgen. Hierbei können ebenfalls konturierte Blechstreifen (23) in Vereinzelung oder in zusammenhängendem Verbund gebildet und anschließend in einem oder mehreren Arbeitsschritten gebogen werden, ggf. unter Einsatz einer o.g. Transfereinrichtung. Das Rohr (22) kann in allen genannten Ausführungsformen generell als Schneid- und Biegeteil aus einem band- oder tafelförmigen Metallblech bzw. einer solchen Platine hergestellt werden.

### BEZUGSZEICHENLISTE

- 1: Achse, Laufachse
- 2: Rad
- 3: Felge
- 4: Achskörper
- 5: Federung, Achsfederung
- 6: Schwinghebelanordnung
- 7: Beschlag
- 8: Achsstummel, Radzapfen
- 9: Radnabe
- 10: Achsteil, Achsrohr außen
- 11: Achsteil, Achsrohr innen
- 12: Schwinghebel
- 13: Federelement, Gummischnur
- 14: Federaufnahme, Einbuchtung
- 15: Überstand
- 16: Übergangsstelle, Krümmung
- 17: Verstärkung, Wulst
- 17': Flügel
- 18: Ausnehmung
- 19: Stoßkante
- 20: Fügenaht, Schweißnaht
- 21: Stanzplatine
- 22: abgewinkeltes Rohr
- 23: Blechstreifen
- 24: Rohrwandung
- 25: Felgeninnenraum
- 26: Felgenring
- 27: Felgenscheibe
- 28: Radbremse
- 29: Einführschräge
- AN2: EP 12 740 917.5-1752 aus PCT/EP2012/063226

## Patentansprüche

1. Achse, insbesondere Laufachse, für Fahrzeuge, insbesondere Anhänger, wobei die Achse (1) einen Achskörper (4) mit einem äußeren tragenden Achsteil (10), insbesondere einem äußeren Achsrohr, und einer darin gelagerten, abgewinkelten Schwinghebelanordnung (6) aufweist, **dadurch gekennzeichnet, dass** die einfach oder mehrfach abgewinkelte Schwinghebelanordnung (6) als einteiliges rohrförmiges, Stanz- und Biegeteil aus Metall ausgebildet ist.

2. Achse nach Anspruch 1, **dadurch gekennzeichnet, dass** die Schwinghebelanordnung (6) aus einem gestanzten und zu einem abgewinkelten Rohr (22) gebogenen Blechstreifen (23) hergestellt ist, wobei das gebogene Rohr (22) einen mittels einer Fügenaht (20), insbesondere einer Schweißnaht (20), geschlossenen Mantel (24) aufweist.

3. Achse nach Anspruch 1 oder 2, **dadurch gekennzeichnet, dass** die Achse (1) eine Federung (5), insbesondere eine im Achsteil (10) integrierte Achsfederung, aufweist.

4. Achse nach Anspruch 1, 2 oder 3, **dadurch gekennzeichnet, dass** die Schwinghebelanordnung (6) ein inneres Achsteil (11) und einen daran quer oder schräg anschließenden Schwinghebel (12) aufweist.

5. Achse nach Anspruch 4, **dadurch gekennzeichnet, dass** die Schwinghebelanordnung (6) am Ende einen quer vom Schwinghebel (12) abstehenden Achsstummel (8) aufweist.

6. Achse nach Anspruche 4 oder 5, **dadurch gekennzeichnet, dass** die Schwinghebelanordnung (6) an der gekrümmten Übergangsstelle (16) zwischen dem inneren Achsteil (11) und dem Schwinghebel (12) eine wulstartige Verstärkung (17) mit einem bevorzugt ovalen Querschnitt der Rohrwandung aufweist.

7. Achse nach einem der Ansprüche 2 bis 6, **dadurch gekennzeichnet, dass** die Schwinghebelanordnung (6) an ihrer Rohrwandung (24), insbesondere an der gekrümmten Übergangsstelle (16), einen Überlappstoß (19) mit einer Kehl-Schweißnaht (20) aufweist.

8. Achse nach einem der Ansprüche 4 bis 7, **dadurch gekennzeichnet, dass** der Biegewinkel α des Rohrs (22) der Schwinghebelanordnung (6) an der gekrümmten Übergangsstelle (16) zwischen dem inneren Achsteil (11) und dem Schwinghebel (12) zwischen 90° und 100° beträgt.

9. Achse nach einem der vorhergehenden Ansprüche, **dadurch gekennzeichnet, dass** die Achse (1) ein Rad (2) mit einer Felge (3) trägt, wobei die Schwinghebelanordnung (6) derart auf die Felge (3) abgestimmt ist, dass ein Schwinghebel (12) zum größten Teil im Felgeninnenraum (25) angeordnet ist.

10. Verfahren zum Herstellen einer Achse (1), insbesondere einer Laufachse, für Fahrzeuge, insbesondere Anhänger, wobei die Achse (1) einen Achskörper (4) mit einem äußeren tragenden Achsteil (10), insbesondere einem äußeren Achsrohr, und einer darin gelagerten, abgewinkelten Schwinghebelanordnung (6) aufweist, **dadurch gekennzeichnet, dass** die einfach oder mehrfach abgewinkelte Schwinghebelanordnung (6) als einteiliges rohrförmiges Stanz- und Biegeteil aus Metall hergestellt wird.

11. Verfahren nach Anspruch 10, **dadurch gekennzeichnet, dass** die Schwinghebelanordnung (6) aus einer Platine (21) oder einem Blechstreifen (23) gestanzt und zu einem abgewinkelten Rohr (22) gebogen wird, wobei die Blechstreifenränder etwa in der längs laufenden Mittellinie des geformten Rohres (22) Stoßkanten (19) bilden, die mit einer Fügenaht (20), insbesondere Schweißnaht, verbunden werden.

12. Verfahren nach Anspruch 10 oder 11, **dadurch gekennzeichnet, dass** bei der Herstellung der Schwinghebelanordnung (6) ein inneres Achsteil (11) und ein daran quer oder schräg anschließender Schwinghebel (12) geformt werden, wobei beim Formen des Rohrs (22), funktionale Formgebungen, insbesondere Einbuchtungen (14) für Federelemente (13), wulstartige Verstärkungen (17), eine Einführschräge (29) oder dgl., durch Prägen gebildet werden, wobei an ausgebauchten ovalen Rändern des Wulstes (17) Stoß- oder Verbindungskanten (19) gebildet werden, die nach der Rohrbiegung zusammenstoßen und mit einer Fügenaht (20), insbesondere Schweißnaht, verschlossen werden.

13. Verfahren nach Anspruch 10, 11 oder 12, **dadurch gekennzeichnet, dass** am freien Ende eines Schwinghebels (12) der Schwinghebelanordnung (6) eine Ausnehmung (18) gebildet und in der Ausnehmung (18) ein Achsstummel (8) eingesetzt und fixiert wird.

14. Verfahren nach Anspruch 12 oder 13, **dadurch gekennzeichnet, dass** die Schwinghebelanordnung (6) mit ihrem inneren Achsteil (11) in ein äußeres Achsrohr (10) eingesteckt und hier ggf. mit einer Achsfederung (5) gelagert wird.

15. Verfahren nach einem der Ansprüche 10 bis 14, **dadurch gekennzeichnet, dass** mit dem Verfahren eine Achse (1) und eine Schwinghebelanordnung (6) nach mindestens einem der Ansprüche 1 bis 9 hergestellt werden.

## Claims

1. Axle, in particular running axle, for vehicles, in particular trailers, wherein the axle (1) has an axle body (4) with an outer carrying axle part (10), in particular an outer axle tube, and an angled oscillating lever arrangement (6) which is mounted therein, **characterized in that** the oscillating lever arrangement (6) which is angled once or more than once is formed as a single-part, tubular, punched and bent part from metal.

2. Axle according to Claim 1, **characterized in that** the oscillating lever arrangement (6) is produced from a sheet-metal strip (23) which is punched and bent to form an angled tube (22), wherein the bent tube (22) has a casing (24) closed by means of a joining seam (20), in particular a weld seam (20).

3. Axle according to Claim 1 or 2, **characterized in that** the axle (1) has a spring mounting (5), in particular an axle spring mounting which is integrated in the axle part (10).

4. Axle according to Claim 1, 2 or 3, **characterized in that** the oscillating lever arrangement (6) has an inner axle part (11) and an oscillating lever (12) adjoining the latter transversely or obliquely.

5. Axle according to Claim 4, **characterized in that** the oscillating lever arrangement (6) has, at the end, an axle stub (8) protruding transversely from the oscillating lever (12).

6. Axle according to Claim 4 or 5, **characterized in that**, at the curved transition point (16) between the inner axle part (11) and the oscillating lever (12), the oscillating lever arrangement (6) has a bead-like reinforcement (17) with a preferably oval cross section of the tube wall.

7. Axle according to one of Claims 2 to 6, **characterized in that** the oscillating lever arrangement (6) has, on its tube wall (24), in particular on the curved transition point (16), a lap joint (19) with a fillet weld seam (20).

8. Axle according to one of Claims 4 to 7, **characterized in that** the bending angle α of the tube (22) of the oscillating lever arrangement (6) at the curved transition point (16) between the inner axle part (11) and the oscillating lever (12) is between 90º and 100º.

9. Axle according to one of the preceding claims, **characterized in that** the axle (1) carries a wheel (2) with a rim (3), wherein the oscillating lever arrangement (6) is coordinated with the rim (3) in such a manner that an oscillating lever (12) is mostly arranged in the rim interior (25).

10. Method for producing an axle (1), in particular a running axle, for vehicles, in particular trailers, wherein the axle (1) has an axle body (4) with an outer carrying axle part (10), in particular an outer axle tube, and an angled oscillating lever arrangement (6) which is mounted therein, **characterized in that** the oscillating lever arrangement (6) which is angled once or more than once is produced as a single-part, tubular, punched and bent part from metal.

11. Method according to Claim 10, **characterized in that** the oscillating lever arrangement (6) is punched from a blank (21) or a sheet-metal strip (23) and is bent to form an angled tube (22), wherein, approximately in the longitudinally running centre line of the shaped tube (22), the sheet-metal strip edges form abutting edges (19) which are connected with a joining seam (20), in particular weld seam.

12. Method according to Claim 10 or 11, **characterized in that** an inner axle part (11) and an oscillating lever (12) adjoining the latter transverse or obliquely are moulded during the production of the oscillating lever arrangement (6), wherein, during the moulding of the tube (22), functional shapings, in particular indentations (14) for spring elements (13), bead-like reinforcements (17), an insertion bevel (29) or the like are formed by embossing, wherein abutting edges or joining edges (19) are formed at bulged oval borders of the bead (17) and, after the bending of the tube, butt together and are closed with a joining seam (20), in particular weld seam.

13. Method according to Claim 10, 11 or 12, **characterized in that** a recess (18) is formed at the free end of an oscillating lever (12) of the oscillating lever arrangement (6), and an axle stub (8) is inserted and fixed in the recess (18).

14. Method according to Claim 12 or 13, **characterized in that** the oscillating lever arrangement (6) is inserted with its inner axle part (11) into an outer axle tube (10) and is optionally mounted here with an axle spring mounting (5).

15. Method according to one of Claims 10 to 14, **characterized in that** an axle (1) and an oscillating lever arrangement (6) according to at least one of Claims 1 to 9 are produced with the method.

## Revendications

1. Essieu, en particulier essieu porteur pour des véhicules, en particulier pour des remorques, l'essieu (1) présentant un corps d'essieu (4) avec une partie d'essieu porteuse extérieure (10), en particulier un tube d'essieu extérieur, et un agencement de levier oscillant (6) coudé, supporté dans celui-ci, **caractérisé en ce que** l'agencement de levier oscillant (6) coudé une ou plusieurs fois est réalisé sous forme de pièce estampée et cintrée tubulaire d'une seule pièce en métal.

2. Essieu selon la revendication 1, **caractérisé en ce que** l'agencement de levier oscillant (6) est fabriqué à partir d'une bande de tôle (23) estampée et cintrée pour former un tube coudé (22), le tube cintré (22) présentant une enveloppe (24) fermée au moyen d'un joint d'assemblage (20), en particulier un joint de soudure (20).

3. Essieu selon la revendication 1 ou 2, **caractérisé en ce que** l'essieu (1) présente une suspension (5), en particulier une suspension d'essieu intégrée dans la partie d'essieu (10).

4. Essieu selon la revendication 1, 2 ou 3, **caractérisé en ce que** l'agencement de levier oscillant (6) présente une partie d'essieu interne (11) et un levier oscillant (12) se raccordant à celle-ci transversalement ou obliquement.

5. Essieu selon la revendication 4, **caractérisé en ce que** l'agencement de levier oscillant (6) présente à l'extrémité une fusée d'essieu (8) faisant saillie transversalement depuis le levier oscillant (12).

6. Essieu selon la revendication 4 ou 5, **caractérisé en ce que** l'agencement de levier oscillant (6) présente, au niveau de la zone de transition courbe (16) entre la partie d'essieu interne (11) et le levier oscillant (12), un renforcement de type bourrelet (17) avec une section transversale de préférence ovale de la paroi tubulaire.

7. Essieu selon l'une quelconque des revendications 2 à 6, **caractérisé en ce que** l'agencement de levier oscillant (6) présente, au niveau de sa paroi tubulaire (24), en particulier au niveau de la zone de transition courbe (16), un joint à chevauchement (19) avec un joint de soudure en angle (20).

8. Essieu selon l'une quelconque des revendications 4 à 7, **caractérisé en ce que** l'angle de courbure α du tube (22) de l'agencement de levier oscillant (6) au niveau de la zone de transition courbe (16) entre la partie d'essieu interne (11) et le levier oscillant (12) est compris entre 90° et 100°.

9. Essieu selon l'une quelconque des revendications précédentes, **caractérisé en ce que** l'essieu (1) porte une roue (2) avec une jante (3), l'agencement de levier oscillant (6) étant ajusté sur la jante (3) de telle sorte qu'un levier oscillant (12) soit disposé en majeure partie dans l'espace interne de la jante (25).

10. Procédé de fabrication d'un essieu (1), en particulier d'un essieu porteur pour des véhicules, en particulier des remorques, l'essieu (1) présentant un corps d'essieu (4) avec une partie d'essieu porteuse extérieure (10), en particulier un tube d'essieu extérieur, et un agencement de levier oscillant (6) coudé, supporté à l'intérieur de celui-ci, **caractérisé en ce que** l'agencement de levier oscillant (6) coudé une ou plusieurs fois est fabriqué sous forme de pièce estampée et cintrée tubulaire d'une seule pièce en métal.

11. Procédé selon la revendication 10, **caractérisé en ce que** l'agencement de levier oscillant (6) est estampé à partir d'une platine (21) ou d'une bande de tôle (23) et est cintré pour former un tube coudé (22), les bords de la bande de tôle formant, approximativement dans l'axe médian longitudinal du tube façonné (22), des bords de jonction (19) qui sont reliés à un joint d'assemblage (20), en particulier un joint de soudure.

12. Procédé selon la revendication 10 ou 11, **caractérisé en ce que** lors de la fabrication de l'agencement de levier oscillant (6), une partie d'essieu interne (11) et un levier oscillant (12) se raccordant à celle-ci transversalement ou obliquement sont formés, et lors de la formation du tube (22), des formations fonctionnelles, en particulier des renfoncements (14) pour des éléments de ressort (13), des renfoncements de type bourrelet (17), un biseau d'insertion (29), ou similaires, sont formés par gaufrage, des bords de jonction ou de liaison (19) étant formés au niveau de bords ovales bombés du bourrelet (17), lesquels butent l'un contre l'autre après la flexion du tube et sont fermés avec un joint d'assemblage (20), en particulier un joint de soudure.

13. Procédé selon la revendication 10, 11 ou 12, **caractérisé en ce qu'**à l'extrémité libre d'un levier oscillant (12) de l'agencement de levier oscillant (6) est formé un évidement (18) et une fusée d'essieu (8) est insérée et fixée dans l'évidement (18).

14. Procédé selon la revendication 12 ou 13, **caractérisé en ce que** l'agencement de levier oscillant (6) est enfiché avec sa partie d'essieu interne (11) dans un tube d'essieu extérieur (10) et est supporté dans ce cas éventuellement avec une suspension d'essieu (5) .

15. Procédé selon l'une quelconque des revendications 10 à 14, **caractérisé en ce qu'**un essieu (1) et un agencement de levier oscillant (6) selon au moins l'une quelconque des revendications 1 à 9 sont fabriqués avec le procédé.
